(19) Europäisches Patentamt
European Patent Office
Office européen des brevets

(11) Publication number: 0 189 484
B1

(12) **EUROPEAN PATENT SPECIFICATION**

(45) Date of publication of patent specification: **07.06.89**

(51) Int. Cl.$^4$: **C 09 K 3/10**

(21) Application number: **85903062.9**

(22) Date of filing: **25.06.85**

(86) International application number:
**PCT/JP85/00359**

(87) International publication number:
**WO 86/00328 16.01.86 Gazette 86/02**

(54) **WATER-SWELLABLE SEALANTAND METHOD OF PREPARATION.**

(30) Priority: **29.06.84 JP 134444/84**

(43) Date of publication of application:
**06.08.86 Bulletin 86/32**

(45) Publication of the grant of the patent:
**07.06.89 Bulletin 89/23**

(84) Designated Contracting States:
**AT BE CH DE FR GB IT LI NL SE**

(56) References cited:
**EP-A-0 070 475**
**FR-A-2 303 844**
**JP-B-49 030 269**
**JP-B-53 038 750**

(73) Proprietor: **ASAHI DENKA KOGYO KABUSHIKI KAISHA**
**2-35, 7-chome Higashiogu**
**Arakawa-ku Tokyo 116 (JP)**

(72) Inventor: **FUKUSHIMA, Takuo**
**29-2, Katsutadai 7-chome Yachiyo-shi**
**Chiba-ken 276 (JP)**
Inventor: **HAYASHIDA, Yasumasa**
**Nishiageo-Daiichidanchi 2-13-106**
**Koshikiya Ageo-shi Saitama-ken 362 (JP)**
Inventor: **OMI, Jinichi**
**7-9-201, Yoyogi 5-chome Shibuya-ku**
**Tokyo 151 (JP)**

(74) Representative: **Patentanwälte Grünecker, Kinkeldey, Stockmair & Partner**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 189 484 B1**

Courier Press, Leamington Spa, England.

## Description

The present invention relates to a water-swellable moisture-curing one-package polyurethane sealant having improved storage stability.

Furthermore, said polyurethane sealant has a rapid curing rate, a short time to tack free, an excellent mechanical strength of the cured material, and an excellent water-stopping effect.

One-package type polyurethane sealants are conventionally and wisely used for sealing materials, binders, and caulking materials in the field of public and construction works. Recently, water-swellable materials have been used to improve water-stopping effects on the joint sealing or pipes.

Japanese patent 49—30209 discloses a fairly good polyurethane sealant. It has, however, an insufficient storage stability in the case of adding filler in order to adjust to practical use. This is caused by an increasing viscosity of partial curing by the reaction of the water in the filler and the urethane prepolymer.

FR—A—2303844 discloses water curable sealants consisting of free NCO containing urethane prepolymers, heat dehydrated clay and a catalyst.

EP—A—70475 discloses water sealants based on polyurethane polymers having terminal hydroxysilane groups.

It is the object of the present invention to provide a water-swellable moisture curing one-package polyurethane sealing having improved storage stability.

Said object is achieved by a water-swellable moisture-curing one-package polyurethane sealant comprising (1) a water-swellable polyurethane prepolymer having a content of 1.5—10% of terminal NCO groups obtained by reacting polyisocyanate with one or more polyetherpolyols having the following general formula I

$$R[(OR_1)_nOH]_p \qquad (I)$$

wherein R is a polyhydric alcohol radical; $(OR_1)_n$ is a polyoxyalkylene chain comprising 50—90 weight % of an oxyethylene unit and 50—10 weight % of an oxyalkylene unit having 3—4 carbon atoms; n is a number which represents the polymerization degree of said polyoxyalkylene chain and restricts the hydroxy group equivalent of said polyetherpolyol (I) to 500—4000; p is a number of 2—8, (2) a non water-swellable polyurethane prepolymer having terminal NCO groups obtained by reacting polyisocyanate with one or more polyetherpolyols having the following general formula II

$$R_2[(OR_3)_mOH]_q \qquad (II)$$

wherein $R_2$ is a polyhydric alcohol radical; $(OR_3)_m$ is a polyoxyalkylene chain comprising an oxyalkylene unit having 3—4 carbon atoms; m is a number which represents the polymerization degree of said polyoxyalkylene chain and m restricts the hydroxy group equivalent of said polyetherpolyol (II) to 500—4000; q is a number of 2—8, and (3) a filler.

Preferred examples of the polyhydric alcohol which corresponds to R in the above general formula I are aliphatic dihydric alcohols (such as ethylene glycol, propylene glycol, 1,4-butylene glycol or neopentyl glycol), aliphatic trihydric alcohols (such as glycerol, trioxyisobutane, 1,2,3-butanetriol, 2-methyl-1,2,3-propanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerol, pentaglycerol, 1,2,4-butanetriol, 1,2,4-pentanetriol, or trimethylolpropane), aliphatic tetrahydric alcohols (such as erythrite, pentaerythrite, 1,2,3,4-pentanetetrol, 2,3,4,5-hexanetetrol, 1,2,3,5-pentanetetrol or 1,3,4,5-hexanetetrol), aliphatic pentahydric alcohols (such as adonite, arabit or xylit), aliphatic hexahydric alcohols (such as sorbit, mannit or idite). Preferred polyhydric alcohols are di-, tri-, or tetrahydric alcohls, particularly propylene glycol and glycerol.

Polyetherpolyols represented by the above general formula I can be obtained by adducting ethylene oxide and alkylene oxide having 3—4 carbon atoms to said polyhydric alcohols by conventional methods, so as to obtain a proper molecular weight and ethylene oxide unit content. While ethylene oxide and alkylene oxide having 3—4 carbon atoms can be adducted in random or block form to form polyetherpolyols, the former is preferred in the present invention. Preferred examples of an alkylene oxide having 3—4 carbon atoms are propylene oxide and butylene oxide, particularly propylene oxide.

The content of the oxyethylene unit in the polyetherpolyol is 50—90 weight %. If the content is more than 90 weight %, the polyurethane prepolymer having NCO groups may crystallize at room temperature thereby losing its good workability. If the content is below 50 weight % the effects of the present invention are not achieved. A content of 50—90 weight % of the ethylene oxide unit is particularly preferred in the case of a random type polyoxyalkylene chain, and a content of 70—90 weight % is particularly preferred in the case of a block type polyoxyalkylene chain.

It is preferred to use a polyetherpolyol having a molecular weight of 1000—10000, particularly a molecular weight of 2000—10000 in the case of tri- or more polyfunctional polyetherpolyols obtained from tri- or more polyhydric alcohols.

Preferred examples of the polyetherpolyols represented by the above general formula I are difunctional polyetherpolyols represented by the following general formula I—1

$$R'[(OR'_1)_nOH]_2 \qquad (I—1)$$

wherein R′ is a dihydric alcohol radical; $(OR'_1)_n$ is a polyoxyalkylene chain comprising 50—90 weight % of an oxyethylene unit and 50—10 weight % of an oxypropylene unit; n is a number which represents the polymerization degree of said polyoxyalkylene chain and n restricts the hydroxy group equivalent of the polyetherpolyol to 500—4000.

Preferred examples of such difunctional polyetherpolyols are polyethers having a hydroxy group equivalent of 500—4000 and a content of 50—90 weight % of ethylene oxide obtained by adducting ethylene oxide and propylene oxide to propylene glycol in random or block form.

Other preferred examples of the polyetherpolyols represented by the above general formula I are trifunctional polyetherpolyols represented by the following general formula I—2

$$R''[(OR'_1)_nOH]_3 \qquad (I—2)$$

wherein R″ is a trihydric alcohol radical; $(OR'_1)_n$ is a polyoxyalkylene chain comprising 50—90 weight % of an oxyethylene unit and 50—10 weight % of an oxypropylene unit; n is a number which represents the polymerization degree of said polyoxyalkylene chain and n restricts the hydroxy group equivalent of the polyetherpolyol to 500—4000.

Preferred examples of such trifunctional polyetherpolyols are polyethers having a hydroxy group equivalent of 500 to 4000 and a content of 50—90 weight % of ethylene oxide obtained by adducting ethylene oxide and propylene oxide to propylene glycol in random or block form.

It is preferred to use a water-swellable polyurethane prepolymer (1) obtained by reacting polyisocyanates with a mixture of the difunctional polyetherpolyol I—1 obtained from dihydric alcohols, such as propylene glycol, and the trifunctional polyetherpolyol I—2 obtained from trihydric alcohols such as glycerol.

It is especially preferred to mix the difunctional polyetherpolyol I—1 and the trifunctional polyetherpolyol I—2 in a weight ratio fo 9:1—7:3.

Examples of polyisocyanates used in the present invention are isocyanates represented by the following general formula

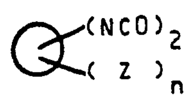

wherein ○ is a benzene ring or a naphthalene ring, —NCO is a ring substituted isocyanate group, Z is a ring substituted halogen atom or an alkyl or alkoxy group having 3 or less carbon atoms and n is a number of 0, 1, or 2, such as 2,4-toluenediisocyanate, 2,6-toluenediisocyanate, 1,4-naphthylenediisocyanate, 1,5-naphthylenediisocyanate, 1,3-phenylenediisocyanate, 1,4-phenylenediisocyanate or 1-isopropylbenzene-2,4-diisocyanate;

isocyanates represented by the following general formula

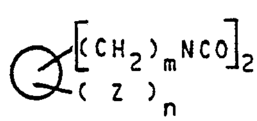

wherein ○ is a benzene ring or a naphthalene ring, $—(CH_2)_mNCO$ is a ring substituted alkyleneisocyanate group, Z is a ring substituted halogen atom or an alkyl group having 3 or less carbon atoms, and n is a number of 0, 1, or 2, such as ω,ω′-diisocyanate-1,2-dimethylbenzol or ω,ω′-diisocyanate-1,3-dimethylbenzol;

isocyanates represented by the following general formula

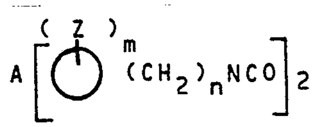

wherein A is $—CH_2—$ or an alkylene group having 3 or more carbon atoms, such as

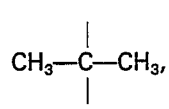

○ is a benzene ring or naphthalene ring, Z is a ring substituted halogen atom or an alkyl or alkoxy group

having 3 or less carbon atoms and n is a number of 0, 1, or 2, such as 4,4'-diphenylmethanediisocyanate, 2,2'-dimethyldiphenylmethanediisocyanate or 3,3'-dichlorodiphenyldimethylmethane-4,4'-diisocyanate;

isocyanates represented by the following general formula

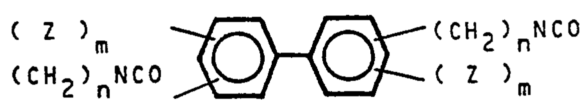

wherein Z is a ring substituted halogen atom or an alkyl or alkoxy group having 3 or less carbon atoms and m is a number of 0, 1, or 2, such as biphenyl-2,4-diisocyanate, biphenyl-4,4'-diisocyanate, 3,3'-dimethylbiphenyl-4,4'-diisocyanate or 3,3'-dimethoxybiphenyl-4,4'-diisocyanate;

diphenylsufone-4,4'-diisocyanate;

isocyanates obtained by hydrogenating aromatic rings of the above mentioned isocyanates such as dicyclohexane-4,4'-diisocyanate, ω,ω'-diisocyanate-1,2-dimethylbenzene or ω,ω'-diisocyanate-1,3-dimethylbenzene;

isocyanates having a substituted urea group obtained by reacting 1 mol of water and 2 mols of diisocyanate (for example, ureadiisocyanate obtained by reacting 1 mol of water and 2 mols of 2,4-toluenediisocyanate);

urethodionediisocyanate obtained by dimerizing aromatic diisocyanates by conventional methods;

propane-1,2-diisocyanate;

2,3-dimethylbutane-2,3-diisocyanate;

2-methylpentane-2,4-diisocyanate;

octane-3,6-diisocyanate;

3,3-dinitropentane-1,5-diisocyanate;

octane-1,6-diisocyanate;

hexamethylenedisocyanate.

The water-swellable polyurethane prepolymer (1) can be obtained by conventionally reacting the polyetherpolyol of the general formula I and polyisocyanate so as to obtain a content of 1.5—10% (preferably 1.5—5%) of terminal NCO groups. The reaction can be executed for example by heating the reactants at a temperature of 80—90°C for 2—3 h.

Preferred examples of the polyhydric alcohol which corresponds to $R_2$ in the above general formula II are the same alcohols as mentioned above for R such as di-, tri-, tetra-, penta-, or hexahydric alcohols.

Polyetherpolyols represented by the above general formula II can be obtained by adducting an alkylene oxide having 3—4 carbon atoms to said polyhydric alcohol by conventional methods, so as to obtain a proper molecular weight. Examples of the alkylene oxide having 3—4 carbon atoms are propylene oxide and butylene oxide. Propylene oxide is particularly preferred.

It is preferred to use a polyetherpolyol having a molecular weight of 1000—9000, particularly a molecular weight of 2000—9000 in the case of a tri- or more functional polyetherpolyol.

It is preferred to use a non water-swellable polyurethane prepolymer (2) obtained by reacting polyisocyanates with a mixture of the difunctional polyetherpolyol obtained from dihydric alcohols, such as proylene glycol, and the trifunctional polyetherpolyol obtained from trihydric alcohols, such as glycerol. It is especially preferred to mix the di- and trifuntional polyetherpolyol in a weight ratio of 9:1—1:9.

Suitable polyisocyanates used for preparing the polyurethane prepolymer (2) are the same isocyanates as mentioned above for the polyurethane prepolymer (1). 4,4'-diphenylmethanediisocyanate (MDI) is particularly desirable for a good adhesiveness of the sealant.

The polyurethane prepolymer (2) can be obtained by conventionally reacting polyethers and polyisocyanates for example at a temperature of 90°C of 3 h.

The filler (3) which is another essential component of the sealant of the invention, can be selected for example from the following materials; calcium carbonate, pearlite, silicone oxide, talc, vermiculite, wollastonite, glass or carbon black. Said components may be used in mixtures of two or more. Calcium carbonate, silicon oxide, titanium oxide, and carbon black are the most preferred fillers.

The sealant of the present invention may include various plasticisers, thixotropic agents, or asphalt materials if necessary. Typical examples of plasticisers are dioctyl phthalate; typical examples of thixotropic agents are bentonite, metal soap, hydrogenated castor oil, or asbeste powder; and typical examples of asphalt materials are coal tar, wood tar, oil gas tar, petroleum asphalt, or pitch.

The polyurethane sealant of the present invention can be prepared by adding the filler (3) to the non water-swellable polyurethane prepolymer (2) to form a one-package sealant (non water-swellable), further adding the water-swellable polyurethane prepolymer (1) to the resulting one-package sealant. Plasticisers, thixotropic agents, and asphalt materials are preferably added with the filler (3).

The preferred sealant of the present invention comprises 100 weight parts of the non water-swellable prepolymer (2), 2—100 (more preferably 10—70) weight parts of the filler (3), and 20—100 (more preferably 30—70) weight parts of the water-swellable prepolymer (1).

The sealant of the present invention can be used, for example, for sealing, binding, or caulking materials in each joint of corrugated boards, slates, plastic sheets, aluminum sheets, sheets of zinc, glass,

concrete, tile pipes, road coatings, floor coatings, motor vehicles, boats, planes, or pipings in the field of building and construction.

The sealant of the present invention can be applied, for example, by pouring it into the joint with a caulking gun, by coating it on the surface of the material with a brush, or by setting the cured sealant to the joint.

The water-swellable moisture-curing one-package polyurethane sealant of the present invention has an improved storage stability. Furthermore, it has a good mechanical strength and an excellent water stopping effect.

Fig. 1 is a graph showing the change of the water swelling percent of the sealant with the time elapsing.

Fig. 2 is a rough cross-section view of an apparatus used for a water stopping test of the water-swellable sealant.

THe numerals refer to

1. steel vessel
2. polyurethane sealant
3. water pouring mouth
4. water pressure gauge

The following examples illustrate the invention. In the examples part means weight part.

## Example 1

313 parts of 4,4'-diphenylmethanediisocyanate and 1500 parts of a polyether having a molecular weight of 4500 obtained by adducting propylene oxide to glycerol were mixed and conventionally reacted at 90°C for 3 h to obtain a polyurethane prepolymer having a content of 3.5% of terminal NCO groups. (Prepolymer A)

23 parts of calcium carbonate and 10 parts of titanium oxide were added to 100 parts of Prepolymer A to obtain a sealant composition.

20 parts of trifunctional polyether having a molecular weight of 7000 and a content of 80% of oxyethylene unit obtained by randomly adducting propylene oxide and ethylene oxide to glycerol and 80 parts of a difunctional polyether having a molecular weight of 5000 and a content of 70% of oxyethylene unit obtained by randomly adducting ethylene oxide to propylene glycol were mixed. Toluenediisocyanate was added to the resulting polyether mixture and reacted at a temperature of 90°C for about 3 h to obtain a water-swellable polyurethane prepolymer having a content of 1.8% of NCO groups. (Prepolymer B)

30 parts of Prepolymer B was added to 100 parts of the sealant composition to obtain a water-swellable moisture-curing one-package polyurethane sealant.

The resulting sealant had a good stability and availability after 6 months of storage in a nitrogen atmosphere. In order to estimate the sealant's properties, it was coated on a glass plate in a thickness of 2 mm and cured at room temperature. The mechanical strength of the cured sealant was measured and is illustrated in Table 1.

## Comparative Example 1

23 parts of calcium carbonate and 10 parts of titanium oxide were added to 100 parts of Prepolymer B to obtain a sealant composition. The sealant composition remarkably increased its viscosity for 5 days in a nitrogen atmosphere and was half-cured after 10 days. It is obvious that the storage stability of the sealant composition of Comparative example 1 is much poorer than that of the sealant of example 1.

## Example 2

313 parts of 4,4'-diphenylmethanediisocyanate and 2250 parts of polypropyleneglycol were mixed and conventionally reacted at 90°C for 3 h to obtain a polyurethane prepolymer having a content of 2.5% of terminal NCO groups. (Prepolymer C)

23 parts of calcium carbonate and 10 parts of titanium oxide were added to 100 parts of Prepolymer C to obtain a sealant composition.

30 parts of Prepolymer B was added to 100 parts of the sealant composition to obtain a water-swellable moisture-curing one-package polyurethane sealant.

The resulting sealant had a good stability and availability after 6 months of storage in a nitrogen atmosphere. The sealant's properties measured by the same method as in Example 1 is shown in Table 1.

## Comparative Example 2

Prepolymer A and B obtained in Example 1 were mixed in a weight ratio of 10:3. 23 parts of calcium carbonate and 10 parts of titanium oxide were added to 100 parts of the resulting prepolymer mixture to obtain a sealant composition. The sealant composition remarkably increased its viscosity for 5 days in a nitrogen atmosphere and was half-cured after 10 days. It is obvious that the storage stability of the sealant composition of Comparative example 2 is much poorer than that of the sealant of Example 1.

TABLE 1

| | Sealant Composition | (Parts) | Preparation of the Sealant |
|---|---|---|---|
| Example 1 | Prepolymer A (Non Water-Swellable) | 100 | the water-swellable sealant was obtained by adding Prepolymer B to a mixture of Prepolymer A and the filler |
| | Filler | 33 | |
| | Prepolymer B (Water-Swellable) | 40 | |
| Comparative Example 1 | Prepolymer B (Water-Swellable) | 100 | the sealant composition was obtained by mixing Prepolymer B and the filler |
| | Filler | 33 | |
| Example 2 | Prepolymer C (Non Water-Swellable) | 100 | the water-swellable sealant was obtained by adding Prepolymer B to a mixture of Prepolymer C and the filler |
| | Filler | 33 | |
| | Prepolymer B (Water-Swellable) | 40 | |
| Comparative Example 2 | Prepolymer A (Non Water-Swellable) | 100 | the sealant composition was obtained by adding the filler to a mixture of Prepolymer A and Prepolymer B |
| | Prepolymer B (Water-Swellable) | 30 | |
| | Filler | 43 | |

| | Storage Stability | Curing Property (2 mm thickness) | Properties 10 Days After Curing |
|---|---|---|---|
| Example 1 | Stable for 6 months in a nitrogen gas | Surface tack free: 1 day Complete curing: 1 and half day | Shore A hardness 30 Tensile strength 2746 kPa (28 kgf/cm$^2$) Elongation 1750% |
| Comparative Example 1 | Viscosity increasing for 5 days Half-cured and unavailable for 10 days in the nitrogen gas | | |
| Example 2 | Stable for 6 months in the nitrogen gas | Surface tack free: 1 day Complete curing: 1 and half day | Shore A hardness 27 Tensile strength 2452 kPa (25 kgf/cm$^2$) Elongation 1690% |
| Comparative Example 2 | Viscosity increasing for 5 days Half-cured and unavailable for 10 days in nitrogen gas | | |

## Example 3

20 parts of a trifunctional polyether having a molecular weight of 5000 obtained by adducting propylene oxide to glycerol and 80 parts of a difunctional polyether having a molecular weight of 5000 obtained by adducting propylene oxide to propylene glycol were mixed. 14 parts of 4,4'-diphenymethane-diisocyanate was added to the resulting polyether mixture and reacted to obtain a polyurethane prepolymer having a content of 2.5% of terminal NCO groups. (Prepolymer D)

23 parts of calcium carbonate and 10 parts of titanium oxide were added to 100 parts of Prepolymer D to obtain a sealant composition.

20 parts of a trifunctional polyether having a molecular weight of 5000 and a content of 70% of an oxyethylene unit obtained by randomly adducting propylene oxide and ethylene oxide to glycerol and 80 parts of difunctional polyether having a molecular weight of 5000 and a content of 70% of an oxyethylene unit obtained by randomly adducting ethylene oxide to propylene glycol were mixed. Toluenediisocyanate was added to the resulting polyether mixture and reacted at a temperature of 90°C for about 3 h to obtain a water-swellable polyurethane prepolymer having a content of 2.0% of terminal NCO groups. (Prepolymer E)

30 parts of Prepolymer E was added to 100 parts of the sealant composition to obtain a water-swellable moisture-curing one-package polyurethane sealant.

The resulting sealant had a good stability and availability after 6 months of storage in a nitrogen atmosphere.

Comparative Example 3

23 parts of calcium carbonate and 10 parts of titanium oxide were added to 100 parts of Prepolymer E to obtain a sealant composition. The sealant composition remarkably increased its viscosity for 5 days in a nitrogen atmosphere and was half-cured after 10 days. It is obvious that the storage stability of the sealant composition of Comparative example 3 is much poorer than that of the sealant of Example 3.

Example 4

23 parts of calcium carbonate and 10 parts of titanium oxide were added to 100 parts of Prepolymer A to obtain a sealant composition.

50 parts of Prepolymer B was added to 100 parts of the sealant composition to obtain a water-swellable moisture-curing one-package polyurethane sealant.

The resulting sealant had a good stability and availability after 6 months of storage in a nitrogen atmosphere.

Table 2 shows the properties of sealants obtained in Example 3 and 4, and in Comparative example 3.

TABLE 2

| | Storage Stability | Curing Property (2 mm thickness) | Properties 10 Days After Curing |
|---|---|---|---|
| Example 3 | Stable for 6 months in a nitrogen gas | Surface tack free: 1 day<br>Complete curing: 1 and half day | Shore A hardness 25<br>Tensile strength 1961 kPa (20 kgf/cm$^2$)<br>Elongation 1600% |
| Comparative Example 3 | Half-cured and unavailable for 10 days in nitrogen gas | | |
| Example 4 | Stable for 6 months in a nitrogen gas | Surface tack free: 1 day<br>Complete curing: 1 and half day | Shore A hardness 28<br>Tensile strength 2550 kPa (26 kgf/cm$^2$)<br>Elongation 1670% |

Fig. 1 shows the water swelling percentage of a water-swellable moisture-curing one-package of polyurethane sealant obtained in Examples 1 to 4. In the following the test method is explained:

A cured sheet was obtained by coating the sealant on a glass plate in a thickness of 2 mm and leaving it 10 days at room temperature. The obtained sheet was cut in 2 × 5 cm sample pieces. Each sample piece was immersed in water and the weight increase was measured with the time elapsed.

$$\text{water swelling percentage (\%)} = (B - A) \times 100/A$$

A: weight of the sample piece before water immersed (g)

B: weight of the sample piece after water immersed (g)

Fig. 1 also shows as a control the water swelling percent of a non water-swellable sealant obtained by mixing a filler with Prepolymer C.

Fig. 1 shows that the water swelling property of the sealants obtained in Examples 1 to 4 is excellent.

The water stopping effect of the sealant was tested by the method illustrated in Fig. 2. The polyurethane sealants 2 obtained in Examples 1 to 4 were coated on a joint of a steel vessel 1 which comprises upper and lower parts. After 2 days of curing, water was poured into vessel 1 through its water pouring mouth 3. There was no water leakage from the joint at the water pressure of 295 kPa (3 kg/cm$^2$). This means that the sealant of the present invention has an excellent water stopping effect.

Examples 5, 6, 7 and 8

The fillers shown in Table 3 were added to 100 parts of Prepolymer D obtained in Example 3 to obtain sealant compositions. 30 parts of Prepolmer E obtained in Example 3 was added to 100 parts of each sealant composition to obtain a water-swellable moisture-curing one-package polyurethane sealant. The resulting sealant had a good stability and availability after 6 months storage in a nitrogen atmosphere. Table 3 shows their properties.

TABLE 3

| | Fillers | (Parts) |
|---|---|---|
| Example 5 | 1) calcium carbonate<br>2) silicon oxide<br>3) calcium hydroxide<br>4) carbon black | 20<br>10<br>2<br>2 |
| Example 6 | 1) calcium carbonate<br>2) talc<br>3) glass powder | 20<br>10<br>3 |
| Example 7 | 1) calcium carbonate<br>2) vermiculite<br>3) carbon black | 20<br>10<br>2 |
| Example 8 | 1) calcium carbonate<br>2) wollastonite<br>3) titanium oxide | 20<br>10<br>2 |

| | Storage Stability | Curing Property (2 mm thickness) | Properties 10 Days After Curing |
|---|---|---|---|
| Example 5 | Stable for 6 months in a nitrogen gas | Surface tack free: 1 day Complete curing: 1 and half day | Shore A hardness 26<br>Tensile strength 2256 kPa (23 kgf/cm$^2$)<br>Elongation 1610% |
| Example 6 | Stable for 6 months in a nitrogen gas | Surface tack free: 1 day Complete curing: 1 and half day | Shore A hardness 28<br>Tensile strength 2648 kPa (27 kgf/cm$^2$)<br>Elongation 1570% |
| Example 7 | Stable for 6 months in a nitrogen gas | Surface tack free: 1 day Complete curing: 1 and half day | Shore A hardness 26<br>Tensile strength 2354 kPa (24 kgf/cm$^2$)<br>Elongation 1600% |
| Example 8 | Stable for 6 months in a nitrogen gas | Surface tack free: 1 day Complete curing: 1 and half day | Shore A hardness 27<br>Tensile strength 2452 kPa (25 kgf/cm$^2$)<br>Elongation 1590% |

**Claims for the Contracting States: BE CH DE SE FR GB IT LI NL**

1. A water-swellable moisture-curing one-package polyurethane sealant comprising

(1) a water-swellable polyurethane prepolymer having a content of 1.5—10% of terminal NCO groups obtained by reacting polyisocyanate with one or more polyetherpolyols having the following general formula I

$$R[(OR_1)_nOH]_p \qquad (I)$$

wherein

R is a polyhydric alcohol radical;

$(OR_1)_n$ is a polyoxyalkylene chain comprising 50—90 weight % of an oxyethylene unit and 50—10 weight % of an oxyalkylene unit having 3—4 carbon atoms;

n is a number which represents the polymerization degree of said polyoxyalkylene chain and restricts the hydroxy group equivalent of said polyetherpolyol (I) to 500—4000;

p is a number of 2—8,

(2) a non water-swellable polyurethane prepolymer having terminal NCO groups obtained by reacting polyisocyanate with one or more polyetherpolyols having the following general formula II

$$R_2[(OR_3)_mOH]_q \qquad (II)$$

wherein

$R_2$ is a polyhydric alcohol radical;

$(OR_3)_m$ is a polyoxyalkylene chain comprising an oxyalkylene unit having 3—4 carbon atoms;

m is a number which represents the polymerization degree of said polyoxyalkylene chain and m restricts the hydroxy group equivalent of said polyetherpolyol (II) to 500—4000;

q is a number of 2—8, and

(3) a filler.

2. The polyurethane sealant according to claim 1 comprising 20—100 weight parts of said water-swellable polyurethane prepolymer (1), 100 weight parts of said non water-swellable polyurethane prepolymer and 2—100 weight parts of filler (3).

3. A method of preparing a water-swellable moisture-curing one-package polyurethane sealant comprising

(a) mixing a filler and the non water-swellable prepolymer according to claim 1 to form a non water-swellable polyurethane composition, and

(b) adding the water swellable polyurethane prepolymer according to claim 1 to said non water-swellable polyurethane composition.

**Claims for the Contracting State: AT**

1. A method of preparing a water-swellable moisture-curing one-package polyurethane sealant comprising

a) mixing a filler and a non water-swellable polyurethane prepolymer having terminal NCO groups obtained by reacting polyisocyanate with one or more polyetherpolyols having the following general formula II

$$R_2[(OR_3)_mOH]_q \qquad (II)$$

wherein

$R_2$ is a polyhydric alcohol radical;

$(OR_3)_m$ is a polyoxyalkylene chain comprising an oxyalkylene unit having 3—4 carbon atoms;

m is a number which represents the polymerization degree of said polyoxyalkylene chain and m restricts the hydroxy group equivalent of said polyetherpolyol (II) to 500—4000;

q is a number of 2—8,

to form a non-water-swellable polyurethane composition and

b adding a water-swellable polyurethane prepolymer having a content of 1.5—10% of terminal NCO groups obtained by reacting polyisocyanate with one or more polyetherpolyols having the following general formula I

$$R[(OR_1)_nOH]_p \qquad (I)$$

wherein

R is a polyhydric alcohol radical;

$(OR_1)_n$ is a polyoxyalkylene chain comprising 50—90 weight % of an oxyethylene unit and 50—10 weight % of an oxyalkylene unit having 3—4 carbon atoms;

n is a number which represents the polymerization degree of said polyoxyalkylene chain and restricts the hydroxy group equivalent of said polyetherpolyol (I) to 500—4000;

p is a number of 2—8,

to said non-water-swellable polyurethane composition.

2. The method of claim 1, comprising mixing 20—100 weight parts of said water-swellable polyurethane prepolymer (1), 100 weight parts of said non water-swellable polyurethane prepolymer and 2—100 weight parts of said filler.

**Patentansprüche für die Vertragsstaaten: BE CH DE SE FR GB IT LI NL**

1. Wasserquellbares feuchtigkeitsaushärtendes Ein-Pack-Polyurethandichtungsmittel, umfassend

(1) ein wasserquellbares Polyurethanvorpolymer mit einem Gehalt von 1,5 bis 10% an endständigen NCO-Gruppen, erhalten durch Umsetzung von Polyisocyanat mit einem oder mehreren Polyetherpolyolen mit der folgenden allgemeinen Formel I

$$R[(OR_1)_nOH]_p \qquad (I)$$

worin

R ein mehrwertiger Alkoholrest ist;

$(OR_1)_n$ eine Polyoxyalkylenkette, umfassend 50 bis 90 Gew.-% einer Oxyethyleneinheit und 50 bis 10 Gew.-% einer Oxyalkyleneinheit mit 3 bis 4 Kohlenstoffatomen, ist;

n eine Zahl ist, die den Polymerisationsgrad der Polyoxyalkylenkette angibt und das Hydroxygruppenäquivalent des Polyetherpolyols I auf 500 bis 4000 beschränk;

p eine Zahl von 2 bis 8 ist,

(2) ein nichtwasserquellbares Polyurethanvorpolymer mit endständigen NCO-Gruppen, erhalten durch Umsetzung von Polyisocyanat mit einem oder mehreren Polyetherpolyolen der folgenden allgemeinen Formel II

$$R_2[(OR_3)_mOH]_q \qquad (II)$$

worin

$R_2$ ein mehrwertiger Alkoholrest ist;

$(OR_3)_m$ eine Polyoxyalkylenkette, umfassend eine Oxyalkyleneinheit mit 3 bis 4 Kohlenstoffatomen, ist;

m eine Zahl ist, die den Polymerisationsgrad der Polyoxyalkylenkette angibt und m das Hydroxygruppenäquivalent des Polyetherpolyols II auf 500 bis 4000 beschränkt;

q ein Zahl von 1 bis 8 ist und

(3) ein Füllmittel.

2. Polyurethandichtungsmittel nach Anspruch 1, umfassend 20 bis 100 Gew.-Teile des wasserquellbaren Polyurethanvorpolymers (1), 100 Gew.-Teile des nicht wasserquellbaren Polyurethanvorpolymers (2) und 2 bis 100 Gew.-Teile des Füllmittels (3).

3. Verfahren zur Herstellung eines wasserquellbaren feuchtigkeitsaushärtenden Ein-Pack-Polyurethandichtungsmittels, bei dem

(a) ein Füllmittel und das nichtwasserquellbare Vorpolymer nach Anspruch 1 gemischt werden zur Bildung einer nicht wasserquellbaren Polyurethanzusammensetzung und

(b) das wasserquellbare Polyurethanvorpolymer nach Anspruch 1 zu der nicht wasserquellbaren Polyurethanzusammensetzung gegeben wird.

**Patentansprüche für den Vertragsstaat: AT**

1. Verfahren zur Herstellung eines wasserquellbaren feuchtigkeitsauschärtenden Ein-Pack-Polyurethandichtungsmittels, bei dem

a) ein Füllmittel und ein nicht wasserquellbares Polyurethanvorpolymer mit endständigen NCO-Gruppen, erhalten durch Umsetzung von Polyisocyanat mit einem oder mehreren Polyetherpolyolen der folgenden allgemeinen Formel II

$$R_2[(OR_3)_mOH]_q \qquad (II)$$

worin

$R_2$ ein mehrwertiger Alkoholrest ist;

$(OR_3)_m$ eine Polyoxylenkette, umfassend eine Oxyalkyleneinheit mit 3 bis 4 Kohlenstoffatomen, ist;

m eine Zahl ist, die den Polymerisationsgrad der Polyoxyalkylenkette angibt und m das Hydroxygrupenäquivalent des Polyetherpolyols II auf 500 bis 4000 beschränkt;

q eine Zahl von 1 bis 8 ist,

gemischt werden zur Bildung einer nicht wasserquellbaren Polyurethanzusammensetzung und

b) ein wasserquellbares Polyurethanvorpolymer mit einem Gehalt von 1,5 bis 10% an endständigen NCO-Gruppen, erhalten durch Umsetzung von Polyisocyanat mit einem oder mehreren Polyetherpolyolen mit der folgenden allgemeinen Formel I

$$R[(OR_1)_nOH]_p \quad (I)$$

worin

R ein mehrwertiger Alkoholrest ist;

$(OR_1)_n$ eine Polyoxyalkylenkette, umfassend 50 bis 90 Gew.-% einer Oxyethyleneinheit und 50 bis 10 Gew.-% einer Oxyalkyleneinheit mit 3 bis 4 Kohlenstoffatomen, ist;

n eine Zahl ist, die den Polymerisationsgrad der Polyoxyalkylenkette angibt und das Hydroxygruppenäquivalent des Polyetherpolyols I auf 500 bis 4000 beschränk;

p eine Zahl von 2 bis 8 ist,

der nicht wasserquellbaren Polyurethanzusammensetzung zugegeben wird.

2. Verfahren nach Anspruch 1, bei dem 20 bis 100 Gew.-Teile des wasserquellbaren Polyurethanvorpolymers, 100 Gew.-Teile des nicht wasserquellbaren Polyurethanvorpolymers und 2 bis 100 Gew.-Teile des Füllmittels gemischt werden.

**Revendications pour les Etats contractants: BE CH DE SE FR GB IT LI NL**

1. Agent d'étanchéité en polyuréthanne à conditionnement unitaire durcissable à l'humidité et gonflant dans l'eau qui comprend

(1) un prépolymère en polyuréthanne gonflant dans l'eau ayant de 1,5 à 10% en groupes NCO terminaux obtenu en faisant réagir un polyisocyanate avec un ou plusieurs polyétherpolyols de formule générale suivante I

$$R[(OR_1)_nOH]_p \quad (I)$$

où R est un radical de polyol; $(OR_1)_n$ est une chaîne polyoxyalcoyléne comprenant 50—90% en poids d'une unité oxyéthyléne et 50—10% en poids d'une unité oxyalcoylène ayant de 3 à 4 atomes de carbone; n est un nombre qui représente le degré de polymérisation de ladite chaîne polyoxyalcoylène et limite l'équivalent en groupes hydroxyles dudit polyétherpolyol (I) à 500—4000; p est un nombre de 2 à 8,

(2) un prépolymére polyuréthanne ne gonflant pas dans l'eau et possédant des groupes NCO terminaux obtenu par action d'un polyisocyanate sur un ou plusieurs polyétherpolyols ayant la formule générale suivante II

$$R_2[(OR_3)_mOH]_q \quad (II)$$

où $R_2$ est un radical de polyol; $(OR_3)_m$ est une chaîne polyoxyalcoylène comprenant une unité oxyalcoyléne de 3 à 4 atomes de carbone; m est un numbre qui représente le degré de polymérisation de ladite chaîne polyoxyalcoylène et m limite l'équivalent en groupes hydroxyles dudit polyétherpolyol (II) à 500—4000; q est un numbre de 2 à 8, et (3) une charge.

(2) L'agent en polyuréthanne selon la revendication 1, comprenant 20 à 100 parties en poids dudit prépolymère de polyuréthanne gonflant dans l'eau (1), 100 parties en poids dudit prépolymère en polyéthanne ne gonflant pas dans l'eau (2) et 2 à 100 parties en poids de charge (3).

3. Procédé de préparation d'un agent d'étanchéité en polyuréthanne à conditionnement unitaire durcissable à l'humidité et gonflant dans l'eau consistant à

(a) mélanger une charge et le prépolymère ne gonflant pas dans l'eau selon la revendication 1 pour former une composition de polyuréthanne ne gonflant dans l'eau et

(b) ajouter le prépolymère en polyuréthanne gonflant dans l'eau selon la revendication 1 à ladite composition de polyuréthanne ne gonflant pas à l'eau.

**Revendications pour l'Etat contractant: AT**

1. Procédé de préparation d'un agent d'e´tanchéité en polyuréthanne à conditionnement unitaire durcissant à l'humidité et gonflant dans l'eau consistant à

a) mélanger une charge et un prépolymére d'uréthanne ne gonflant pas dans l'eau et possédant des groupes NCO terminaux obtenu par action d'un polyisocyanate sur un ou plusieurs polyétherpolyols ayant la formule générale suivante II

$$R_2[(OR_3)_mOH]_q \quad (II)$$

où $R_2$ est un radical de polyol; $(OR_3)_m$ est une chaîne polyoxyalcoylène comprenant une unité oxyalcoyléne de 3 à 4 atomes de carbone; m est un numbre qui représente le degré de polymérisation de ladite chaîne polyoxyalcoylène et m limite l'équivalent en groupes hydroxyles dudit polyétherpolyol (II) à 500—4000; q

est un numbre de 2 à 8, pour former une composition en polyuréthanne ne gonflant pas dans l'eau, et

b) ajouter un prépolymère en polyuréthanne gonflant dans l'eau ayant de 1,5 à 10% en groupes NCO terminaux obtenu en faisant réagir un polyisocyanate avec un ou plusieurs polyétherpolyols de formule générale suivante I

$$R[(OR_1)_nOH]_p \qquad (I)$$

où R est un radical de polyol; $(OR_1)_n$ est une chaîne polyoxyalcoyléne comprenant 50—90% en poids d'une unité oxyéthyléne et 50—10% en poids d'une unité oxyalcoylène ayant de 3 à 4 atomes de carbone; n est un nombre qui représente le degré de polymérisation de ladite chaîne polyoxyalcoylène et limite l'équivalent en groupes hydroxyles dudit polyétherpolyol (I) à 500—4000; p est un nombre de 2 à 8, à ladite composition en polyuréthanne ne gonflant pas dans l'eau.

2. Procédé selon la revendication 1, consistant à mélanger 20 à 100 parties en poids dudit prépolymère de polyuréthanne gonflant dans l'eau, 100 parties en poids dudit prépolymère en polyuréthanne ne gonflant pas dans l'eau et 2 à 100 parties en poids de ladite charge.

Fig. 1

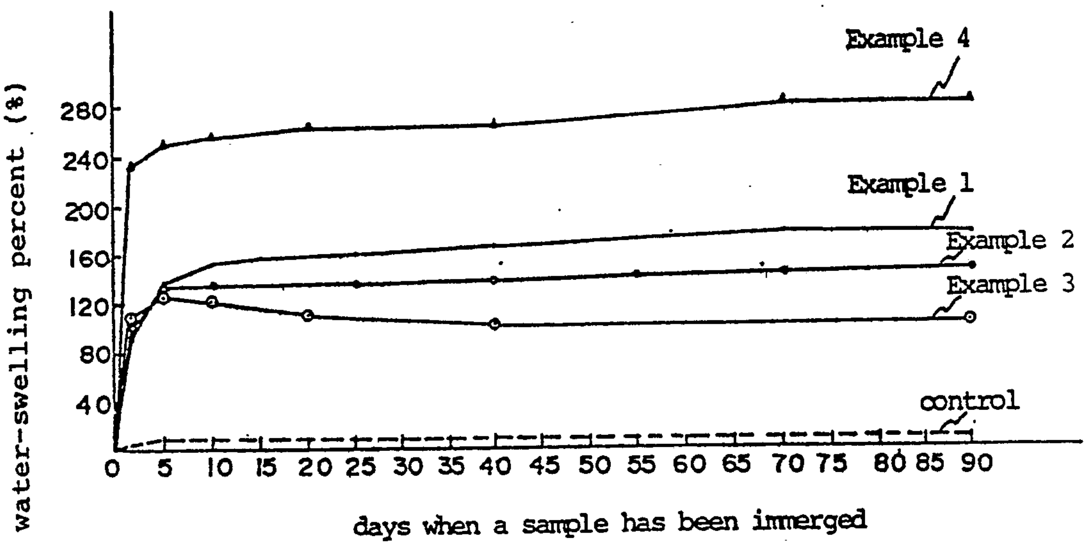
Example 4
Example 1
Example 2
Example 3
control
water-swelling percent (%)
280
240
200
160
120
80
40
0
5
10
15
20
25
30
35
40
45
50
55
60
65
70
75
80
85
90
days when a sample has been immerged

Fig. 2

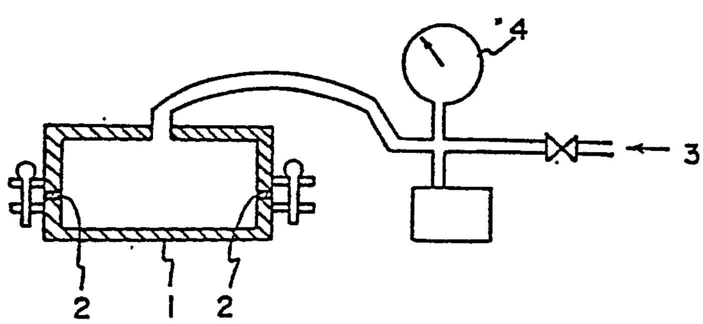
4
3
2
1
2